(19) Europäisches Patentamt
European Patent Office
Office européen des brevets

(11) **EP 2 886 407 A1**

(12) **EUROPÄISCHE PATENTANMELDUNG**

(43) Veröffentlichungstag:
24.06.2015 Patentblatt 2015/26

(51) Int Cl.:
*B60T 8/17* (2006.01)     *B60T 8/172* (2006.01)

(21) Anmeldenummer: 13400038.9

(22) Anmeldetag: 18.12.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **x-log Elektronik GmbH**
**81541 München (DE)**

(72) Erfinder:
• **Eck, Peter**
**82377 Penzberg (DE)**
• **Matzner, Rolf**
**80639 München (DE)**
• **Schweden, Henning**
**42555 Velbert Langenberg (DE)**

(54) **Schätzung des Wankwinkels eines einspurigen Fahrzeugs**

(57)    Die Erfindung betrifft ein Verfahren zur Ermittlung des bei Kurvenfahrten auftretenden Wankwinkels eines einspurigen Fahrzeuges. Erfindungsgemäß wird dabei der Wankwinkel durch eine Sensorik, die aus einem Gyrosensor, mindestens einem Beschleunigungssensor und einer Verarbeitungseinheit besteht, geschätzt. Das Überschreiten eines Schwellenwertes des Wankwinkels kann somit dem Fahrzeugführer signalisiert werden. Die Aufzeichnung und Auswertung der Daten ermöglicht beispielsweise die Analyse und Verbesserung des Fahrverhaltens.

FIGUR 1

EP 2 886 407 A1

**Beschreibung**

Stand derTechnik

Die Erfindung betrifft ein Verfahren und eine Vorrichtung zur Ermittlung einer Schätzung für den Wankwinkel, das ist der Winkel zwischen der Fahrzeughochachse und der horizontalen Ebene, eines einspurigen Fahrzeugs. Allgemein bekannt sind kamerabasierte Systeme oder die mechanische Ermittlung des Wankwinkels mit Hilfe eines am Fahrzeug angebrachten Messrades. Aus der DE102004060292A1 ebenfalls bekannt ist ein Verfahren, bei dem der Wankwinkel mit Hilfe von wenigstens zwei Drehratensensoren ermittelt wird.

Aufgabenstellung und Vorteile der Erfindung

Nachteilig an der alleinigen Verwendung von Drehratensensoren ist der Umstand, dass der gewünschte Winkel durch Integration aus der Drehrate berechnet werden muss. Damit führen konstante Offset- und Driftfehler der Drehratensensoren zu wachsenden Fehlern des Schätzergebnisses.

Die vorliegende Erfindung löst dieses Problem dadurch, dass neben dem Messwert eines Drehratensensors zur Erfassung der Drehrate $\omega$ um die Fahrzeuglängsachse auch der/die Messwert(e) wenigstens eines Beschleunigungssensors verwendet werden. Aus dem Verhältnis der gemessenen Beschleunigung in Richtung der Fahrzeughochachse zur Erdbeschleunigung kann der Wankwinkel berechnet werden.

Nachteilig an einer alleinigen Verwendung von Beschleunigungswerten ist der Umstand, dass diese sehr stark durch Bodenunebenheiten, Fahrbahneinflüsse und Vibrationen gestört werden. Diese Störungen können zu einer fehlerhaften Schätzung des Wankwinkels führen.

In einer vorteilhaften Ausgestaltung löst die vorliegende Erfindung dieses Problem durch Fusion der Beschleunigungsmesswerte mit dem Drehratenmesswert, vorzugsweise mit Hilfe eines Kalman-Filters. Neben dem Kalman-Filter kann auch jede andere Methode der Datenfusion, z.B. ein Partikelfilter, Verwendung finden.

Bei einem realen zweispurigen Fahrzeug, z.B. einem Kraftrad, wirkt die Gesamtbeschleunigung in der Querschnittebene nicht exakt in Richtung der Fahrzeughochachse 103, sondern entlang einer Linie, die durch den i. A. nicht exakt bekannten Schwerpunkt S des Fahrzeugs und den Auflagepunkt A des Rades 101 auf der Fahrbahn 102 definiert wird (Wirkachse 104). Ein einziger Beschleunigungssensor nur in Richtung der Fahrzeughochachse ist deswegen zur korrekten Ermittlung des Wankwinkels nicht ausreichend. In einer vorteilhaften Ausgestaltung nutzt die Erfindung die Messwerte eines zweiten Beschleunigungssensors in Richtung der Fahrzeugquerachse 106. Durch Kombination beider Beschleunigungsmesswerte können (a) eine korrekte Gesamtbeschleunigung und (b) eine Korrektur für den Fehlerwinkel 105 zwischen Fahrzeughochachse und Wirkachse berechnet werden.

Eine Anordnung mit einem Drehratensensor, der nicht exakt entlang der Fahrzeuglängsachse orientiert ist, oder mit Beschleunigungssensoren, die nicht exakt entlang der Fahrzeughoch- bzw. -querachse orientiert sind, nutzt entsprechend die Projektionen der gemessenen Drehraten- bzw. Beschleunigungsmesswerte auf die jeweiligen Achsen.

Ausführungsbeispiel

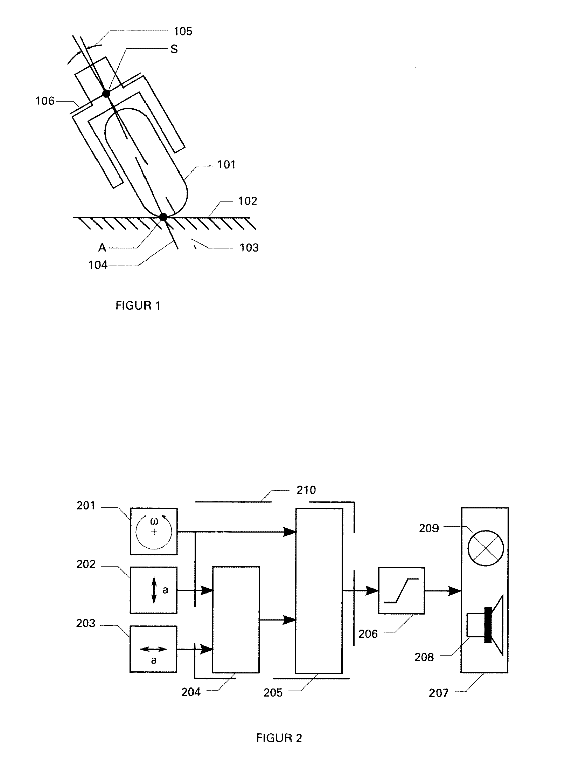

Eine vorteilhafte Ausführungsform der Erfindung ist in Figur 2 dargestellt. Ein Beschleunigungssensor 202 misst die Beschleunigung $a_z$ des Fahrzeuges in Richtung der Fahrzeughochachse 103, ein weiterer Beschleunigungsrigssensor 203 die Beschleunigung $a_y$ des Fahrzeuges in Richtung der Fahrzeugquerachse 106, ein Drehratensensor 201 die Drehrate $\omega_x$ des Fahrzeugs um die Fahrzeuglängsachse.

Die Messwerte der Beschleunigungssensoren 202 und 203 werden in einer Korrektureinheit 204 zu einem ersten Schätzwert $\varphi_1$ für den Wankwinkel $\varphi$ verarbeitet:

$$\varphi_1 = \arccos\left(\frac{1}{\sqrt{a_y^2 + a_z^2}}\right) + \left|\arctan\left(\frac{a_y}{a_z}\right)\right|$$

Dieser erste Schätzwert $\varphi_1$ und die gemessene Drehrate $\omega_x$ dienen als Eingangs und Kontrollsignale eines Kalman-Filters 205, das einen zweiten Schätzwert $\varphi_2$ berechnet.

Ein Kalman-Filter dient dazu, den Systemzustand eines Prozesses zu schätzen. Dabei wird explizit zwischen der Dynamik des Systemzustandes und dem Messprozess unterschieden. Im Grunde ist ein Kalman-Filter ein Satz von Gleichungen mit Hilfe derer, trotz fehlerbehafteter Messungen und verrauschten Systemzuständen, der wahre Zustand eines Systems geschätzt werden kann:

$$x_k = A \cdot x_{k-1} + B \cdot u_k + w_{k-1}$$

$$z_k = H \cdot x_k + v_k$$

Der Systemzustandsvektor $x_k$ zum Zeitpunkt k setzt sich dabei zusammen aus dem Zustandsvektor $x_{k-1}$ zum Zeitpunkt k-1, einem Kontrollvektor $u_k$ und dem Prozessrauschvektor $w_k$. Der Messvektor $z_k$ setzt sich aus dem aktuellen Zustandsvektor und dem Messrauschvektor $V_k$ zusammen. Die Matrix A bildet die Zustandsübergangsmatrix, B die Kontrolleingangsmatrix und H die Beobachtungsmatrix.

In der vorteilhaften Gestaltung des Ausführungsbeispiels wird als Zustandsvektor

$$x_k = \begin{pmatrix} \varphi_k \\ \omega_{0,k} \end{pmatrix}$$

gewählt. $\omega_{0,k}$ ist dabei der modellierte, nicht unmittelbar beobachtbare Offset des Drehratensensors, $\varphi_k$ der modellierte Wankwinkel. Letzterer wird zur Ermittlung des Fehlersignals für das Kalman-Filter mit dem ersten Schätzwert $\varphi_1$ verglichen.

In Figur 2 stellen der erste Schätzwert $\varphi_1$ des Wankwinkels das Eingangssignal und die Drehrate $\omega_x$ das Korrektursignal dar.

Das Ausgangssignal $\varphi_2$ des Kalman-Filters kann zur späteren Analyse aufgezeichnet werden oder an ein weiteres Gerät, z.B. ein Mobiltelefon oder die Bordelektronik des Fahrzeugs, mit Kabel oder per Funk übertragen werden. In der dargestellten Ausführungsform Figur 2 wird der zweite Schätzwert einem Schwellwertentscheider 206 zugeführt. Überschreitet der Schätzwert für den Wankwinkel eine voreingestellte kritische Grenze, gibt der Schwellwertentscheider 206 ein Signal an eine Signalisierungseinheit 207. Diese warnt den Fahrzeugführer mit einem optischen 209 und einem akustischen 208 Warnsignal.

In einer besonders vorteilhaften Ausführungsform ist die Signalisierungseinheit 207 im Schutzhelm des Fahrzeugführers untergebracht und per Funk an den Schwellwertentscheider 206 angebunden.

**Patentansprüche**

1. Verfahren zur Ermittlung des Wankwinkels eines einspurigen Fahrzeugs, bei dem mittels eines Drehratensensors und wenigstens eines ersten Beschleunigungssensors aus der gemessenen Drehrate und der wenigstens einen gemessenen Beschleunigung der Wankwinkel des Fahrzeugs geschätzt wird.

2. Verfahren nach Anspruch 1, **dadurch gekennzeichnet, dass** der Drehratensensor zur Messung der Drehrate um die Fahrzeuglängsachse und ein Beschleunigungssensor zur Messung der Beschleunigung in Richtung der Fahrzeughochachse ausgelegt ist.

3. Verfahren nach Ansprüchen 1 oder 2, **dadurch gekennzeichnet, dass** ein zweiter Beschleunigungssensor zur Messung der Beschleunigung in Richtung der Fahrzeughochachse ausgebildet ist und eine Gesamtbeschleunigung durch vektorielle Addition der Werte des ersten und zweiten Beschleunigungssensors gebildet wird.

4. Verfahren nach Ansprüchen 1 bis 3, **dadurch gekennzeichnet, dass** aus den gemessenen Beschleunigungswerten eine erste Schätzung für den Wankwinkel ermittelt wird, diese erste Schätzung als Messgröße und die gemessene Drehrate als Eingangsgröße eines Kalman-Filters dienen und der Zustandsvektor des Kalman-Filters wenigsten den Wankwinkel und den Offset des Drehratensensors enthält.

5. Verfahren nach Anspruch 4, **dadurch gekennzeichnet, dass** die erste Schätzung des Wankwinkels aus dem Arcus-Cosinus des Kehrwertes der ermittelten Beschleunigung verwendet wird.

6. Verfahren nach Ansprüchen 3 und 4, **dadurch gekennzeichnet, dass** der Fehlerwinkel e zwischen der Fahrzeug-Hochachse einerseits und der durch den Schwerpunkt S des Fahrzeugs und dem Auflagepunkt A des Fahrzeugrades auf der Fahrbahn definierten Geraden andererseits durch Bilden des Arcus-Tangens des Verhältnisses der Messwerte des zweiten und des ersten Beschleunigungssensors berechnet wird.

7.  Verfahren nach Ansprüchen 1 bis 6, **dadurch gekennzeichnet, dass** das Überschreiten wenigstens einer Schwelle durch den ermittelten Schätzwert des Wankwinkels dem Fahrzeugführer signalisiert wird.

8.  Verfahren nach Anspruch 7, **dadurch gekennzeichnet, dass** das Überschreiten der Schwelle dem Fahrzeugführer durch eine mit dem Schutzhelm des Fahrzeugführers verbundene Signalisierungsvorrichtung signalisiert wird.

9.  Verfahren nach Ansprüchen 1 bis 7, **dadurch gekennzeichnet, dass** die ermittelten Schätzwerte auf einem Speichermedium aufgezeichnet werden.

10. Verfahren nach Ansprüchen 1 bis 7, **dadurch gekennzeichnet, dass** die ermittelten Schätzwerte an ein externes Gerät zur Weiterverarbeitung übertragen werden.

11. Vorrichtung zur Ermittlung des Wankwinkels eines einspurigen Fahrzeugs, bestehend aus

    o einem Drehratensensor zur Messung der Drehrate um die Fahrzeuglängsachse,
    o wenigstens einem Beschleunigungssensor zur Messung der Beschleunigung wenigstens in Richtung der Fahrzeughochachse und
    o einer Recheneinheit zur Berechnung einer Schätzung des Wankwinkels aus den Messwerten der Sensoren.

12. Vorrichtung nach Anspruch 11, zusätzlich enthaltend eine Signalisierungseinheit zur Anzeige eines einen Grenzwert überschreitenden Wankwinkels.

13. Vorrichtung nach Anspruch 11 und 12, **dadurch gekennzeichnet, dass** die Signalisierungseinheit mit dem Schutzhelm des Fahrzeugführers verbunden ist.

FIGUR 1

FIGUR 2

Europäisches
Patentamt

European
Patent Office

Office européen
des brevets

**EUROPÄISCHER RECHERCHENBERICHT**

Nummer der Anmeldung

EP 13 40 0038

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/76925 A1 (NIRA AUTOMOTIVE AB [SE]; GUSTAFSSON FREDRIK [SE]; AHLQVIST STEFAN [SE]) 18. Oktober 2001 (2001-10-18) | 1-4,7-13 | INV. B60T8/17 B60T8/172 |
| Y | * Seite 4, Zeile 31 - Zeile 32 * * Seite 25, Zeile 12 - Seite 32, Zeile 14 * * Abbildungen 5A,5B,6 * * Seite 5, Zeile 16 - Zeile 26 * ----- | 5,6 | |
| Y | WO 02/01151 A1 (NIRA DYNAMICS AB [SE]; GUSTAFSSON FREDRIK [SE]; DREVOE MARCUS [SE]; FO) 3. Januar 2002 (2002-01-03) * Seite 16, Zeile 5 - Zeile 13 * ----- | 5,6 | |
| X | DE 10 2006 061483 A1 (CONTINENTAL TEVES AG & CO OHG [DE]) 23. August 2007 (2007-08-23) * Absatz [0034] * ----- | 1,11 | |
| X | DE 10 2008 043794 A1 (BOSCH GMBH ROBERT [DE]) 20. Mai 2010 (2010-05-20) * Ansprüche 1,5 * ----- | 1-3,11 | RECHERCHIERTE SACHGEBIETE (IPC) |
| X | DE 100 03 832 A1 (SCHUBACH RUDOLF [DE]) 2. August 2001 (2001-08-02) * Abbildung 7 * ----- | 1,7,11, 12 | B60T |

Der vorliegende Recherchenbericht wurde für alle Patentansprüche erstellt

| Recherchenort | Abschlußdatum der Recherche | Prüfer |
|---|---|---|
| München | 22. April 2014 | Colonna, Massimo |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 13 40 0038

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2014

| Im Recherchenbericht angeführtes Patentdokument | Datum der Veröffentlichung | Mitglied(er) der Patentfamilie | Datum der Veröffentlichung |
|---|---|---|---|
| WO 0176925 A1 | 18-10-2001 | AT 415324 T | 15-12-2008 |
| | | AT 474749 T | 15-08-2010 |
| | | AU 5071501 A | 23-10-2001 |
| | | EP 1274613 A1 | 15-01-2003 |
| | | EP 2030852 A1 | 04-03-2009 |
| | | ES 2317897 T3 | 01-05-2009 |
| | | SE 0002212 A | 13-12-2001 |
| | | US 2004199300 A1 | 07-10-2004 |
| | | WO 0176925 A1 | 18-10-2001 |
| WO 0201151 A1 | 03-01-2002 | AU 6653201 A | 08-01-2002 |
| | | EP 1305568 A1 | 02-05-2003 |
| | | WO 0201151 A1 | 03-01-2002 |
| DE 102006061483 A1 | 23-08-2007 | DE 102006061483 A1 | 23-08-2007 |
| | | EP 1989086 A1 | 12-11-2008 |
| | | US 2009222164 A1 | 03-09-2009 |
| | | WO 2007096319 A1 | 30-08-2007 |
| DE 102008043794 A1 | 20-05-2010 | DE 102008043794 A1 | 20-05-2010 |
| | | EP 2358574 A1 | 24-08-2011 |
| | | JP 2012508664 A | 12-04-2012 |
| | | US 2011288693 A1 | 24-11-2011 |
| | | WO 2010054887 A1 | 20-05-2010 |
| DE 10003832 A1 | 02-08-2001 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004060292 A1